# EUROPEAN PATENT SPECIFICATION

(11) **EP 1 902 593 B1**
(45) Date of publication and mention of the grant of the patent: **05.10.2011**
(21) Application number: 06781210.7
(22) Date of filing: 12.07.2006
(51) Int. Cl.: H04W 64/00

(54) **NETWORK NODE**
NETZWERKKNOTEN
NOEUD DE RESEAU

(30) Priority: 12.07.2005 JP 2005202696
(43) Date of publication of application: 26.03.2008
(73) Proprietor: Panasonic Corporation, Kadoma-shi Osaka 571-8501 (JP)
(72) Inventor: HIRANO, Jun Matsushita Electric Industrial Co., Ltd, 2-1-61, Shiromi, Chuo-ku Osaka 540-6207 (JP); KOH, Tien-Ming, Benjamin Panasonic Singapore Lab. Pte.Ltd, Tai Seng Industrial Estate 534415 (SG); NG, Chan Wah Panasonic Singapore Lab. Pte.Ltd, Tai Seng Industrial Estate 534415 (SG); TAN, Pek Yew Panasonic Singapore Lab. Pte.Ltd, Tai Seng Industrial Estate 534415 (SG)
(74) Representative: Grünecker, Kinkeldey, Stockmair & Schwanhäusser Anwaltssozietät
(86) International application number: PCT/JP2006/314203
(87) International publication number: WO 2007/007904

(56) References cited:
- EP-A- 1 511 270
- EP-A- 1 524 814
- US-A1- 2005 148 342

## Description

### TECHNICAL FIELD

The present invention' relates to the field of telecommunications in a packet switched data communications network. More particularly, the present invention relates to the updates concerning the location and mobility information of the mobile node having wireless communication functionality.

### BACKGROUND ART

Mobile computing, which includes access to the Internet on the move, is getting more popular nowadays. Mobility refers to the fact that the network connection is available even when a node moves. Multimode terminals with the ability to connect to the Internet using a wide range of access technologies, such as Third Generation (3G) cellular networks, General Packet Radio Service (GPRS), IEEE (Institute of Electronic and Electronics Engineers) 802.11a/b/g and Bluetooth are also getting more popular.

Various portable computing devices such as handheld mobiles, laptops and Personal Digital Assistants (PDAs) with enhanced networking capabilities have increased the demand for seamless communication both in wired and wireless networks. Increased use of multimedia contents such as video conferencing makes seamless communication an essential and required feature in mobile connections. Practical mobility management should provide seamless handoff where the user does not observe communication disruptions. Today's mobile data networks commonly consist of several wireless overlapping networks, supporting different data rates and geographical coverage, and can only be accessed via media specific air interfaces.
[Patent Document 1] U.S. Patent Publication 20050020280A1
[Patent Document 2] U.S. Patent Publication 20050036476A1
[Patent Document 3] U.S. Patent Publication 20050048990A1
[Patent Document 4] U.S. Patent Publication 20050059413A1
[Patent Document 5] U.S. Patent Publication 20050064879A1

Each time a mobile node changes a cell, a subnet or a network, coverage responsibilities have to be switched between respective serving access nodes. To provide seamless roaming among these networks, the need for communication among the network nodes in order to request the reservation of resources for the mobile node has to be done. This is, however, getting to be a more complex problem as the movement speed of the mobile node increases such as users accessing the internet while in a public transport hence making it even more difficult to gauge the intended direction of movement of the mobile node in order to reserve resources a priori.

Knowing the location and intended mobility (the moving velocity and also the intended direction) of the mobile node may also be of commercial interest such as providing location-based services lying along the path of the intended motion. For example, a tourist may get some indication of the different sights or attractions as he moves down the street and the information is dynamically updated and refreshed as he turns around a corner (i.e. as the moving direction in which he moves changes).

One solution of the Patent Document 1 proposes a scheme that utilises a tracking system and a locator system. The solution primarily uses GPS (Global Positioning Service) to determine location and information is transmitted via the cellular network. When GPS is unavailable, a secondary system is such as Bluetooth or cellular is used. This solution however requires the usage of expensive and unwieldy equipment such as GPS receiver and may not be cost efficient for widespread adoption.

Another solution utilises a Smart Network Access Point (SNAP) to store location information (refer to the Patent Document 2). The mobile node may then request for information from the SNAP. This solution requires the mobile node to actively request for information from each network access point and may prove to be expensive in terms of power when the mobile node in question is a small handheld unit.

Furthermore, another solution similarly utilises network access points by calculating its location by correlating information from them during the association process (refer to the Patent Document 3). This solution is computationally expensive and also requires the existence of several available nearby access points which may not always be possible, hence the solution will be ineffective in the situation of no existence of several available nearby access points.

Furthermore, some other solutions utilise a central server to gather information regarding the locations of the various surrounding users by measuring their signal strength and other reported information (refer to the Patent Documents 4 and 5). These solutions however require the terminal to continually send reports to the network which may prove to be expensive in terms of power.

Furthermore, document EP 1 511 270 discloses a method wherein a server automatically updates presence information of a user terminal according to a change in a state and position information of the user terminal.

### DISCLOSURE OF THE INVENTION

It is thus an object of the present invention to overcome or at least substantially ameliorate the aforementioned disadvantages and shortcomings of the prior art. Specifically, it is an object of the present invention to efficiently and effectively convey location and mobility related information about a mobile node to the network in order to facilitate location and mobility related functions and services.

To achieve the object of the present invention, the present invention provides A network node for disseminating location and mobility related information, comprising:
a message receiving means for receiving, from an adjacent network node, a message including an identifier of the mobile node and a count metric which indicates a distance to the mobile node;
an information storing means for storing the identifier of the mobile node and the count metric included in the message;
a count metric changing means for changing the count metric and generating a new count metric so as to indicate that a distance between a network node which next receives a message and the mobile node is longer than a distance between this network node and the mobile node; and
a message sending means for sending a message including the identifier of the mobile node and the new count metric to an adjacent network node.

Furthermore, it is preferable that, in addition to the above-mentioned construction, the network node comprises a priority determining means for determining priority of resource reservation for the mobile node.

Furthermore, it is preferable that, in addition to the above-mentioned construction, the priority determining means determines the priority of resource reservation for the mobile node based on an estimated distance from the count metric stored in the information storing means.

Furthermore, it is preferable that, in addition to the above-mentioned construction, the priority determining means determines the priority of resource reservation for the mobile node based on movement velocity of the mobile node estimated from update frequency of the count metric stored in the information storing means.

Furthermore, it is preferable that, in addition to the above-mentioned construction, identification information identifying successive message dissemination includes in the message received from the adjacent network node and the message sent to the adjacent network node in order to prevent duplicate dissemination of the message.

Furthermore, it is preferable that, in addition to the above-mentioned construction, the count metric changing means changes the count metric by a value based on a network type which the network node belongs to.

Furthermore, it is preferable that, in addition to the above-mentioned construction, the value added to the count metric is bigger in relation to the network type of which communication coverage area of a base station is wide-ranged, the mobile node being associated with the base station.

The present invention comprising the foregoing construction has the advantage of efficiently and effectively conveying location and mobility related information about a mobile node to the network in order to facilitate location and mobility related functions and services.

### BRIEF DESCRIPTION OF THE DRAWINGS

Fig. 1 is a diagram showing a network composition where a mobile node moves and passes through many networks according to the embodiment of the present invention;
Fig. 2 is a diagram showing the information elements required in an update message disseminating the location and mobility information across the neighbouring network nodes in the network composition of Fig. 1;
Fig. 3 is a diagram showing the functional architecture of the network nodes utilising the update message of Fig. 2 for efficient and effective location and mobility information dissemination; and
Fig. 4 is a diagram showing the priority tables of the network nodes as the mobile node roams across positions A, B, C and D in Fig. 1.

### BEST MODE FOR CARRYING OUT THE INVENTION

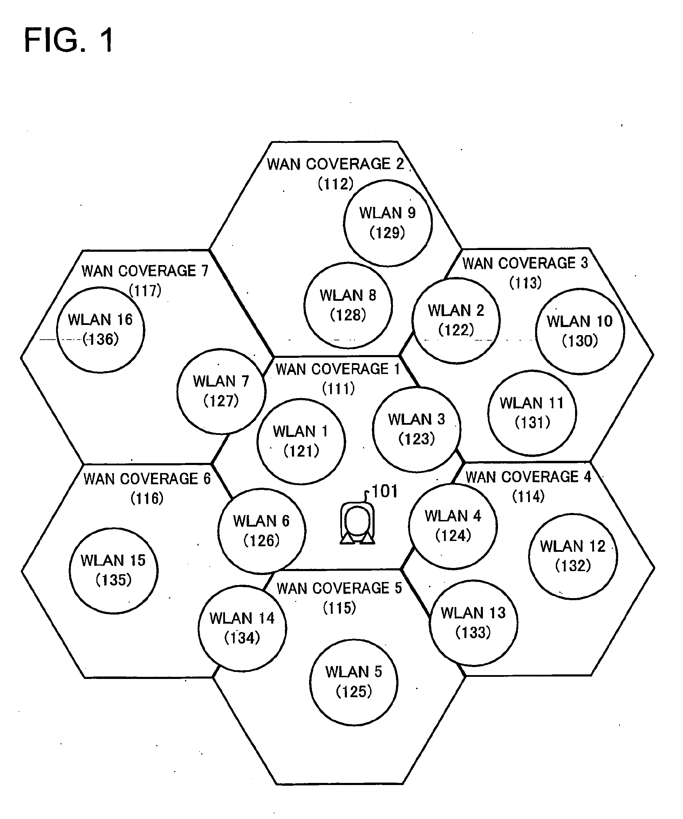

Descriptions follow hereinafter referring to the drawings. Fig. 1 is a diagram showing a network composition where a mobile node moves and passes through many networks according to the embodiment of the present invention. Fig. 1 describes a typical scenario where a mobile node 101 is roaming in a neighbourhood where there are multiple overlapping areas of network coverage such as WAN (Wide Area Network) base stations and WLAN (Wireless LAN) access points. It is illustrated in Fig. 1 that multiple WAN coverage areas (WAN coverage area 1 (111) to WAN coverage area 7(117)) and multiple WLAN coverage areas (WLAN coverage area 1 (121) to WLAN coverage area 16 (136)) are intermingled.

In the interest of session continuity and better user experience, it is often required for some form of handover preparation to be done before the mobile node 101 transits from one area of network coverage to another. Examples of handover preparation would include, but are not limited to, resource reservation for bandwidth, context transfers or pre-authentication for services. Network nodes may also want to provide the mobile node 101 with location-based services such as information on nearby attractions or locations of operator (carrier) hotspots. In this description, an access point or a base station to which a mobile node is associated is referred to as a network node, and network nodes which have adjacent network coverage areas are referred to as adjacent network nodes. Furthermore, 1-hop denotes a unit for a message (an update message to be described) to be delivered. For example, 1-hop message forwarding represents the fact that the message is forwarded among the adjacent network nodes.

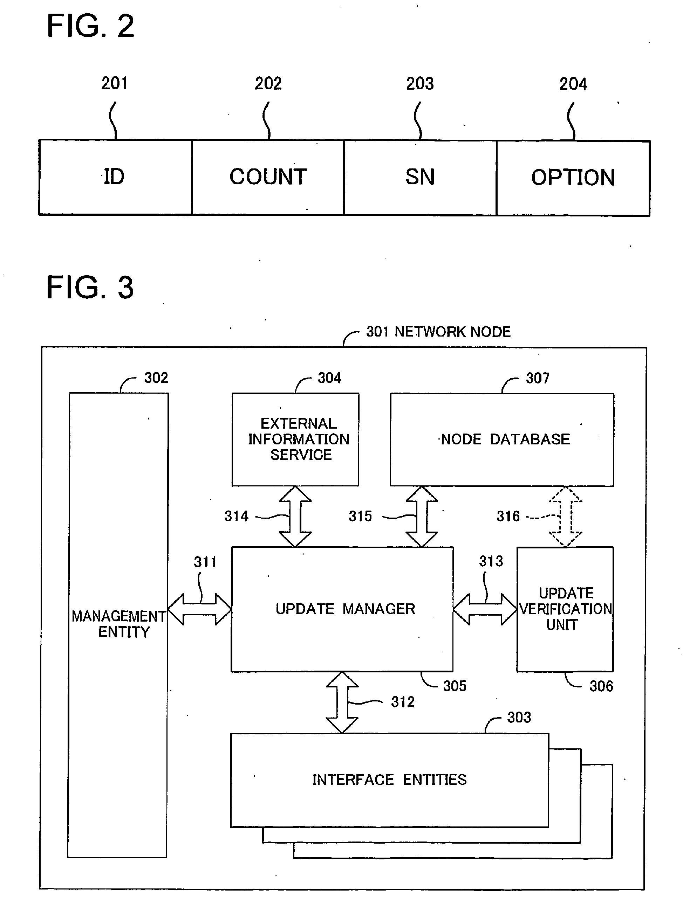

In order to effect simple communication of location and mobility of the mobile node to surrounding network nodes, the present invention proposes the use of a few additional fields making up the update message to be propagated by the network nodes either through a dedicated message packet or piggy-backed onto existing message frames exchanged between the network nodes. The proposed additional fields are shown in Fig. 2.

Fig. 2 is a diagram showing the information elements required in an update message disseminating the location and mobility information across the neighbouring network nodes in the network composition of Fig. 1. The ID field 201 is used to identify the mobile node for which this update is referring to. An example would be using the MAC (Media Access Control) identifier of the mobile node 101, a value found in IEEE802 standards compliant terminals.

The Count field 202 is a metric that describes how far the mobile node currently is from the source of the update. The value used in the Count field 202 is may simply be an integer that either counts up or down depending on implementation. For the rest of the embodiment, the value in the Count field 202 would be assumed to start from a positive integer and is decremented as the update message gets propagated further. The originator of the update message can set the initial value of the Count to the intended value to properly adjust the reachable range of the update message (this corresponds to the hop number for the update message to be forwarded). From this Count metric, the characteristics of the movement of the mobile node 101 with respect to the network node 301 may be estimated. Successive increments of the value in the Count field 202 of the mobile node 101's update message received from other network nodes may imply that the mobile node 101 is approaching the network node 301 and is getting nearer.

The rate of change of the Count field 202 metric would give a hint of the speed at which the mobile node 101 is travelling. The network node can record the Count metric of each mobile node with its reception time. In this case, the network node can know the variation value of the Count metric (that is the difference value between the Count metrics about the mobile node received previous time and received this time). The network node can also get the knowledge of the approaching velocity (or the receding velocity) at which the mobile node approaches this network node (or recedes from this network node) by calculating how many values this variation value changes per unit time. To be more precise, the network node upon receiving the update message can compute the rate of change of the Count metric per unit time by calculating the difference between the Count metric in the update message and the Count metric of the same mobile node received previous time (the Count metric memorized in the network node), and dividing this calculated value by the difference between this reception time and the previous reception time. The Count metric corresponds to the distance between the mobile node and this network node, hence, the rate of change of the Count metric per unit time can be regarded as the approaching velocity (or the receding velocity) at which the mobile node approaches this network node.

SN field 203 is a field including a sequence number that helps detect duplication of the update message transmission. An example of a sequence number may be an integer that rolls over once it reaches the maximum value and starts again from the smallest value, or it may simply contain a time stamp depending on the implementation.

The Option field 204 is a field including an optional parameter that may contain additional information or parameters concerning the mobile node 101. An implementation of the Option field 204 might be Type, Length and Value fields that define the various options. An example of an option may be the preferred operator of the mobile node 101. Hence network nodes belonging to the specified operator may grant the mobile node a higher priority of service.

The functional components making up the network node 301 for this invention is shown in Fig. 3. Fig. 3 is a diagram showing the functional architecture of the network nodes utilising the update message of Fig. 2 for efficient and effective location and mobility information dissemination. The network node 301 is assumed to be any node that implements the invention; examples include but are not limited to Wireless LAN access points, base stations and routers. The Management Entity 302 represents an entity within the network node that monitors the node activity and exercises control over node activity. Upon detection of the mobile node 101, the Management Entity 302 informs the Update Manager 305 via signal path 311 about the presence of the mobile node 101 and provides an ID 201 describing the mobile node 101. An example of this detection may be due to the mobile node 101 registering or associating with the network node 301. The Update Manager 305 proceeds to update the Node Database 307 with information regarding the mobile node 101. Alternatively the Interface Entities 303, which may be the various network interfaces found on the network node 301 or their controlling entities, may have received an update message and pass it up to the Update Manager 305 via path 312. This update message may originate from the mobile node 101 or other network nodes. The network node may send the update message concerning the mobile node according to the request for sending from the mobile node, or may spontaneously send the update message concerning the mobile node in the case of detecting the mobile node's association with its coverage area.

Upon receiving the update message via path 312, the Update Manager 305 should consult the Update Verification Unit 306 via path 313 in order to resolve duplicates or other error conditions. Due to the nature of the update message propagation (the update message has a nature to be propagated), it is conceivable that duplicated messages may arrive at different timings or that conflicting Count field 202 metrics may be received. It is the function of the Update Verification Unit 306 to ensure that the received update message is the most recent. This may preferably be verified by checking the ID 201 and SN 203 against the most recently recorded entry in the Node Database 307 via path 316. A SN field 203 value that is less recent than that recorded in the Node Database would cause the update message to be discarded. If the SN field 203 value is the same as that recorded in the Node Database 307 and the Count field 202 metric is similar, then nothing further needs be done although this is not an error condition and the Update Manager 305 may choose to propagate the message. If the SN field 203 value is the same as that recorded in the Node Database 307 but the Count 202 metric is different, different actions may be taken by the Update Verification Unit 306. Depending upon the implemented policy, the Update Verification Unit 306 may choose to simply utilize the lower or higher Count field 202 metric or calculate a new Count field 202 metric based on rules specified in the policy. This new update message is then returned to the Update Manager 305 via path 313. The Update Verification Unit 306 may optionally perform the process equivalent to the verification (or authentication) for the possibility to provide services because it characteristically verifies the update message at the early timing of reception. The verification for the possibility to provide services may be, for example, to authenticate that this mobile node has authority to receive the subsequent services, or to verify that roaming association has been established between this mobile node and the network node (transmission source) or the network to which the mobile node belongs.

The Update Manager 305 upon receiving the verified message from the Update Verification Unit 306, based on preconfigured or dynamic processes, proceeds to modify the Count field 202 metric by the determined amount and update the Node Database 307 with updated information about the mobile node 101 via path 315. The Update Manager 305 then decides if the update message should be propagated. The new update message may be sent via path 312 to the respective Interface Entities 303 to be propagated to surrounding network nodes using the respective interfaces' broadcast rules if available. It may also alternatively send the update message by unicast to all known neighbour network nodes. Furthermore in this instance, the Update Manager 305 may also memorize the network node '(the source of the previous update message) that has sent the update message before, and regulate the update message transmission so as not to send the new update message to this memorized network node.

In the case when the update message contains additional parameters that require information not found within the Update Manager 305 or Node Database 307, the Update Manager 305 may access an external Information Service 304 via path 314 to obtain the necessary information to perform its functions. An example could be an acceleration or movement vector given in the Option field 204. The mobile node may actually measure an acceleration or movement vector, for example, by using GPS. Alternatively, the network system may measure it, for example, by tracking.the movement of the mobile node. The Update Manager 305 would require an external Information Service 304 in order to properly serve the Count field 202 and decide whether to propagate the update message and if so, the required changes to the Count field 202 metric. As the Count field 202 metric comes to 0 or less than a predetermined value, the network node preferably discards the update message without further forwarding of the update message.

The following describes an example of the operation of the invention. In Fig. 1, when the mobile node 101 first enters the WAN Coverage 1 (111), it would register with the base station providing the coverage area. Hence the Management Entity 302 located in the base station of WAN Coverage 1 (111) would inform its Update Manager 305 of the presence of the mobile node 101 and it's ID 201. The Update Manager 305 checks the Node Database 307 and finding no prior entry, adds the ID 201 for the mobile node 101 into the Node Database 307 and sets the Count field 202 entry to the initial policy-controlled value. Depending on policy, the base station of WAN Coverage 1 (111) decides to propagate an update message to its immediate neighbours, the base stations of WAN Coverage 2 (112) to 7 (117).

The respective base stations would then receive the update message via their respective Interface Entities 303 which then passes the message to the Update Manager 305. The Update Manager 305 first verifies that the update message is valid with the aid of the Update Verification Unit 306. The Update Verification Unit 306 finds no previous entry within the Node Database 307 and returns the update message to the Update Manager 305 as a valid update message. The Update Manager 305 then proceeds to adjust the Count field 202 metric accordingly and then update the Node Database 307.

When the mobile node 101 enters the network coverage of WLAN 1 (121), it may decide to send an update message to the access point of the WLAN 1 (121). The updating and propagation of the update message within the WLAN networks are similar to the above described.

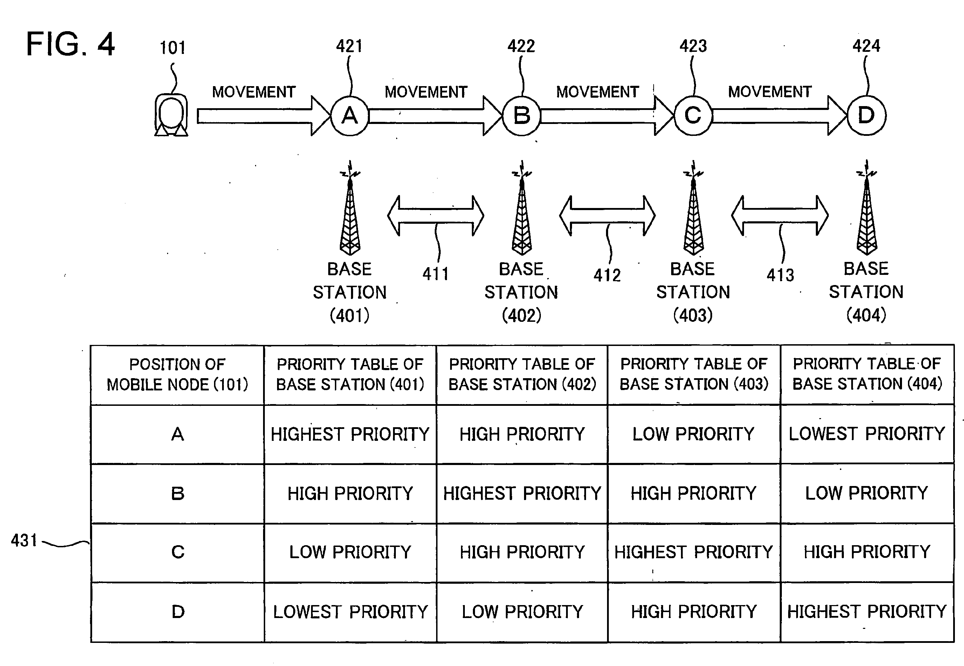

An application of the present invention is given in Fig. 4. Fig. 4 is a diagram showing the priority tables of the network nodes as the mobile node roams across positions A, B, C and D in Fig. 1. The mobile node 101 is moving through positions A (421), B (422), C (423) and D (424). The update message is communicated between the base stations 401, 402, 403 and 404 via the message paths of 411, 412 and 413 respectively. A possible implementation of the state of individual priority tables 431 for each base station 401, 402, 403 and 404 for reservation of resources for the mobile node 101 at each position is shown in Fig. 4. Taking the example of the base station 404, as the mobile node 101 moves progressively nearer through positions A (421) to B (422) then C (423) and finally D (424), the priority for reservation of resources get accordingly higher from lowest to highest priority in preparation for any required handover or traffic.

In another embodiment, assuming that the operator controlling the base station also controls the nearby WLAN network, it may then decide to propagate information about the mobile node 101 simultaneously on both the WAN and WLAN networks. The Count field 202 metric in this case starts from the same value but is modified by a different amount after each hop depending on the type of network that the update message is transversing. Hence a WAN base station would decrease the Count field 202 metric by a much greater amount as compared to the access point of a WLAN. A different implementation might be to have different starting values of the Count field 202 metric and reduce it linearly for respective networks. In this case, the WAN base station would start with a much smaller value of the Count field 202 metric as compared to the WLAN access point, although both might decrement it by the same amount after each propagation.

In another embodiment, if the update message is propagated in an interface-type agnostic manner, then the Count field 202 metric would be decremented by a different value after each hop propagation depending on factors such as the type of current node or externally obtained location information such as from the external Information Service 304. An example of an interface-type agnostic propagation would be to carry the update message over IP (Internet Protocol) packets or some other higher layer protocol.

In another embodiment, the determination of the degree of change in the Count field 202 metric may be' affected by the speed at which the mobile node 101 is travelling. This may be estimated via the use of the rate of change of the Count field 202 metric as previously described. Hence update messages for slow moving mobile nodes may not be propagated as far as the update messages for mobile nodes travelling at a higher speed.

In the above embodiment, the priority for the mobile node 101 is set according to the Count metric about the mobile node 101 (corresponds to the distance between the mobile node 101 and the network node). Hence it is possible that, when there are many mobile nodes 101 near a network node, the network node set the highest priority to all of many mobile nodes 101. In this case, this network node has to reserve the necessary resources for all of many mobile nodes 101. This is practically impossible considering that this network node has limited resources.

To avoid the occurrence of such a problem, the network node may decide the priority considering the rate of change of the Count value per unit time in addition to the Count value about the mobile node 101.

Furthermore, the network node can rank a plurality of mobile nodes, give them relative rank and determine the priority of the mobile node 101 based on the relative rank. In this case, the network node will push up or pull down the relative rank of the mobile node according to the Count metric, for example. In the situation such that the rank of a certain mobile node 101 moves up from 100 to 50, the priority rank of the other mobile nodes that have been ranked at 50 to 99 drops back by 1.

When the network node memorizes the Count metric about each mobile node 101 so as to obtain reception time of each Count metric, the network node will push up or pull down the relative rank of the mobile node according to the variation value of change of the Count metric or the rate of change of the Count metric per unit time. The degree of change of the relative rank pushed up or pulled down may be constant, or the value determined by the function including variable such as Count metric, variation value of the Count metric, rate of the change of the Count metric per unit time or current rank of priority as parameter.

In this way, the network node can give rank to each mobile node 101, determine the priority of each mobile node according to the rank and reserve the resource based on the priority. To be more precise, for example, the network node may give the highest priority to mobile nodes ranked in the top 20, the high priority to those ranked at 21 to 50, the low priority to those ranked at 51 to 100 and the lowest priority to those ranked at 101 or more, and the network node may reserve the resource according to the determined priority. Thus, the network node can allocate the limited resources to each mobile node 101 properly.

Although the invention has been herein shown and described in what is conceived to be the most practical and preferred embodiment, it will be appreciated by those skilled in the art that various modifications may be made in details of design and parameters, such as variations in the design of the Update Verification Unit 306 or other components of the architecture in Fig. 3, without departing from the scope and ambit of the invention.

Each functional block used in the above-mentioned embodiments of the present invention is typically realized as an LSI (Large Scale Integrated Circuit) which is an Integrated Circuit. Functional blocks can be processed into 1-chip respectively, and part or all of functional blocks can be processed into 1-chip so as to be included in 1-chip. The above LSI can be called IC (Integrated Circuit), System LSI or Super LSI, according to the degree of integration.

Furthermore, the way to be processed into Integrated Circuit is not only to manufacture LSI but also to produce a dedicated circuit or a general processor. After manufacturing LSI, FPGA (Field Programmable Gate Array) to be programmable, or Reconfigurable Processor to be reconfigure connection or configuration of circuit cells in LSI can be utilized.

Furthermore, if another new technology of integration substituting for LSI appears due to development of the semiconductor technology or creation of another technology, functional blocks can be of course integrated by using the new technology. For example, the biological technology may be the new technology.

### INDUSTRIAL APPLICABILITY

The present invention comprising the foregoing construction has the advantage of efficiently and effectively conveying location and mobility related information about a mobile node to the network in order to facilitate location and mobility related functions and services. The present invention can be applied to the communication technology of the packet-switched data communication network, or specifically the technology to perform the updates concerning the location and mobility information of the mobile node having wireless communication functionality.

## Claims

1. A network node (301) for disseminating location and mobility related information, comprising:
a message receiving means (303) for receiving, from an adjacent network node, a message including an identifier (201) of the mobile node and a count metric (202) which indicates a distance to the mobile node;
an information storing means (307) for storing the identifier of the mobile node and the count metric included in the message;
a count metric changing means (305) for changing the count metric and generating a new count metric so as to indicate that a distance between a network node which next receives a message and the mobile node is longer than a distance between this network node and the mobile node; and
a message sending means (303) for sending a message including the identifier of the mobile node and the new count metric to an adjacent network node.

2. The network node according to claim 1, comprising a priority determining means for determining priority of resource reservation for the mobile node.

3. The network node according to claim 2, wherein the priority determining means determines the priority of resource reservation for the mobile node based on an estimated distance from the count metric stored in the information storing means.

4. The network node according to claim 3, wherein the priority determining means determines the priority of resource reservation for the mobile node based on movement velocity of the mobile node estimated from update frequency of the count metric stored in the information storing means.

5. The network node according to claim 1, wherein identification information identifying successive message dissemination includes in the message received from the adjacent network node and the message sent to the adjacent network node in order to prevent duplicate dissemination of the message.

6. The network node according to claim 1, wherein the count metric changing means changes the count metric by a value based on a network type which the network node belongs to.

7. The network node according to claim 6, wherein the value added to the count metric is bigger in relation to the network type of which communication coverage area of a base station is wide-ranged, the mobile node being associated with the base station.

## Patentansprüche

1. Netzwerkknoten (301) zum Verbreiten von orts- und mobilitätsbezogener Information, umfassend:
ein Mitteilungsempfangsmittel (303) zum Empfangen einer Mitteilung, die eine Kennung (201) des Mobilknotens und eine einen Abstand zu dem Mobilknoten angebende Zählmetrik (202) enthält, von einem benachbarten Netzwerkknoten;
ein Informationsspeichermittel (307) zum Speichern der Kennung des Mobilknotens und der Zählmetrik, die in der Mitteilung enthalten sind;
ein Zählmetrikänderungsmittel (305) zum Ändern der Zählmetrik und Erzeugen einer neuen Zählmetrik, um so anzugeben, dass ein Abstand zwischen einem Netzwerkknoten, der als Nächster eine Mitteilung empfängt, und dem Mobilknoten größer als ein Abstand zwischen diesem Netzwerkknoten und dem Mobilknoten ist; und
ein Mitteilungssendemittel (303) zum Senden einer Mitteilung, die die Kennung des Mobilknotens und die neue Zählmetrik enthält, an einen benachbarten Netzwerkknoten.

2. Netzwerkknoten nach Anspruch 1, umfassend ein Prioritätsbestimmungsmittel zum Bestimmen einer Priorität einer Ressourcenreservierung für den Mobilknoten.

3. Netzwerkknoten nach Anspruch 2, wobei das Prioritätsbestimmungsmittel die Priorität einer Ressourcenreservierung für den Mobilknoten auf Grundlage eines geschätzten Abstandes aus der Zählmetrik, die in dem Informationsspeichermittel gespeichert ist, bestimmt.

4. Netzwerkknoten nach Anspruch 3, wobei das Prioritätsbestimmungsmittel die Priorität einer Ressourcenreservierung für den Mobilknoten auf Grundlage einer Bewegungsgeschwindigkeit des Mobilknotens bestimmt, der aus einer Aktualisierungsfrequenz der in dem Informationsspeichermittel gespeicherten Zählmetrik geschätzt wird.

5. Netzwerkknoten nach Anspruch 1, wobei Identifikationsinformation zur Identifizierung einer sukzessiven Mitteilungsverbreitung in der Mitteilung, die von dem benachbarten Netzwerkknoten empfangen wird, und der Mitteilung, die an den benachbarten Netzwerkknoten gesendet wird, enthalten ist, um eine doppelte Verbreitung der Mitteilung zu verhindern.

6. Netzwerkknoten nach Anspruch 1, wobei das Zählmetrikänderungsmittel die Zählmetrik um einen Wert auf Grundlage eines Netzwerktyps ändert, zu dem der Netzwerkknoten gehört.

7. Netzwerkknoten nach Anspruch 6, wobei der Wert, der zu der Zählmetrik addiert wird, größer in Beziehung zu dem Netzwerktyp ist, dessen Kommunikationsabdeckungsfläche einer Basisstation einen großen Bereich abdeckt, wobei der Mobilknoten der Basisstation zugeordnet ist.

## Revendications

1. Noeud de réseau (301) permettant de diffuser des informations liées à un emplacement et à une mobilité, comprenant :
un moyen de réception de messages (303) permettant de recevoir, en provenance d'un noeud de réseau adjacent, un message incluant un identificateur (201) du noeud mobile et
une mesure de comptage (202) qui indique une distance au noeud mobile,
un moyen de mémorisation d'informations (307) permettant de mémoriser l'identificateur du noeud mobile et la mesure de comptage qui sont inclus dans le message,
un moyen de modification de la mesure de comptage (305) permettant de changer la mesure de comptage et de générer une nouvelle mesure de comptage de façon à indiquer que la distance entre un noeud de réseau qui reçoit ensuite un message et le noeud mobile est plus longue que la distance entre ce noeud de réseau et le noeud mobile, et
un moyen d'envoi de messages (303) permettant d'envoyer un message incluant l'identificateur du noeud mobile et la nouvelle mesure de comptage à un noeud de réseau adjacent.

2. Noeud de réseau selon la revendication 1, comprenant un moyen de détermination de priorité permettant de déterminer la priorité de la réservation de ressources pour le noeud mobile.

3. Noeud de réseau selon la revendication 2, dans lequel le moyen de détermination de priorité définit la priorité de la réservation de ressources pour le noeud mobile sur la base de la distance estimée à partir de la mesure de comptage mémorisée dans le moyen de mémorisation d'informations.

4. Noeud de réseau selon la revendication 3, dans lequel le moyen de détermination de priorité détermine la priorité de la réservation de ressources pour le noeud mobile sur la base de la vitesse du mouvement du noeud mobile qui est estimée à partir de la fréquence de mise à jour de la mesure de comptage mémorisée dans le moyen de mémorisation d'informations.

5. Noeud de réseau selon la revendication 1, dans lequel les informations d'identification identifiant une diffusion successive de messages sont incluses dans le message reçu en provenance du noeud du réseau adjacent ainsi que dans le message envoyé au noeud du réseau adjacent afin d'empêcher la duplication de la diffusion du message.

6. Noeud de réseau selon la revendication 1, dans lequel le moyen de modification de la mesure de comptage change la mesure de comptage avec une valeur fondée sur le type de réseau auquel appartient le noeud de réseau.

7. Noeud de réseau selon la revendication 6, dans lequel la valeur ajoutée à la mesure de comptage est plus grosse relativement au type de réseau pour lequel la zone de couverture de communications d'une station de base est largement étendue, le noeud mobile étant associé à la station de base.
